(19) Europäisches Patentamt
European Patent Office
Office européen des brevets

(11) **EP 3 650 502 A1**

(12) **EUROPEAN PATENT APPLICATION**
published in accordance with Art. 153(4) EPC

(43) Date of publication:
**13.05.2020 Bulletin 2020/20**

(51) Int Cl.:
*C08L 101/00* *(2006.01)*      *C08K 3/22* *(2006.01)*
*C08K 5/29* *(2006.01)*      *C08L 11/02* *(2006.01)*
*C09J 11/04* *(2006.01)*      *C09J 11/06* *(2006.01)*
*C09J 101/02* *(2006.01)*      *C09J 201/00* *(2006.01)*

(21) Application number: **18827599.4**

(22) Date of filing: **20.06.2018**

(86) International application number:
**PCT/JP2018/023407**

(87) International publication number:
**WO 2019/009070 (10.01.2019 Gazette 2019/02)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **04.07.2017   JP 2017130999**

(71) Applicant: **Denka Company Limited
Tokyo 103-8338 (JP)**

(72) Inventors:
• **KIYOFUJI Gaito
Itoigawa-city
Niigata 949-0393 (JP)**
• **KOBAYASHI Naoki
Itoigawa-city
Niigata 949-0393 (JP)**
• **HAGIWARA Shogo
Itoigawa-city
Niigata 949-0393 (JP)**
• **ABE Yasushi
Itoigawa-city
Niigata 949-0393 (JP)**

(74) Representative: **Hoffmann Eitle
Patent- und Rechtsanwälte PartmbB
Arabellastraße 30
81925 München (DE)**

(54) **POLYMER LATEX COMPOSITION AND USE THEREOF**

(57)      Provided is a polymer latex composition that can be used in a two-liquid-type adhesive having good adhesive strength on rigid adherends such as concrete and mortar.

Provided is a polymer latex composition for use in a mixed latex composition having the polymer latex composition and a curing agent composition having an isocyanate group as a functional group, wherein the polymer latex composition comprises:

15 to 100 parts by mass of a surfactant component on a solid basis; and

30 to 600 parts by mass of a metal hydroxide with respect to 100 parts by mass of the polymer.

*Fig.1*

## Description

## Technical Field

The present technique relates to a polymer latex composition. More specifically, it relates to a polymer latex composition for use in a mixed latex composition comprising the polymer latex composition and a curing agent composition having an isocyanate group as a functional group, a mixed latex composition comprising the polymer latex composition and a curing agent composition, an adhesive composition in which the mixed latex composition is used, and a cured product in which the adhesive composition is used, and an application of the cured product, and a civil engineering repairing and reinforcing method in which the adhesive composition is used.

## Background Art

In the field of adhesives, two-liquid-type adhesives have been conventionally contemplated as a technique for improving adhesive strength. For example, Patent Literature 1 discloses an adhesive composition composed of a main agent in an emulsion state, constituted by a polymer emulsion containing a polyol having two or more hydroxyl groups that can react with an isocyanate group, and a curing agent containing a polyisocyanate compound, and Patent Literature 2 discloses a two-liquid-type adhesive composed of an emulsion-type aqueous adhesive and an adhesion promoter having water absorbability, phase inversion action, and/or viscosity enhancing action on the adhesive.

Additionally, conducted has been a study on a two-liquid-type adhesive in which a chloroprene-based polymer is used as the base of the main agent, wherein the chloroprene-based polymer is known to be excellent in heat resistance, weatherability, ozone resistance, chemical resistance, and the like and to have well-balanced properties in comparison with natural rubber, other synthetic resins, and the like. For example, Patent Literature 3 discloses a two-liquid-type adhesive composition comprising a main agent containing 1 to 100 parts by weight of an acrylic or/and SBR-based latex solid and 0.01 to 10 parts of a nonionic or anionic surfactant with respect to 100 parts of a solid of an anionic polymer latex composition, and a polyvalent metal salt as a curing agent, and Patent Literature 4 discloses a two-liquid-type aqueous polychloroprene adhesive composed of a main agent that contains a polymer latex composition, which is obtained by emulsion-copolymerizing chloroprene with at least 2,3-dichloro-1,3-butadiene, and a tackifier resin, and a curing agent containing water-dispersed type isocyanate compound.

However, the two-liquid-type adhesives described in Patent Literatures 1 to 4 mentioned above could not achieve sufficient adhesive strength on rigid adherends such as concrete and mortar. The stability of the latex as the main agent was insufficient, and mixing the main agent and the curing agent in advance generates an aggregate, and thus, there also has been a problem in practicality, for example, it was limited to use two-liquid separate types. Further, there has been the problem that sufficient adhesive strength cannot be also achieved on wet adherends.

## Citation List

## Patent Literature

Patent Literature 1: Japanese Unexamined Patent Publication No. 2004-2545
Patent Literature 2: Japanese Unexamined Patent Publication No. S56-59874
Patent Literature 3: Japanese Unexamined Patent Publication No. H9-188860
Patent Literature 4: Japanese Unexamined Patent Publication No. 2002-53829

## Summary of Invention

## Technical Problem

It is a primary object of the present technique to provide a polymer latex composition that can be used in a two-liquid-type adhesive having good adhesive strength on rigid adherends such as concrete and mortar.

## Solution to Problem

The inventors of the present application have intensively studied on components for improving adhesive strength in order to solve the above problems, and as a result, have found that metal hydroxides, which have been conventionally used for improving flame retardancy, unexpectedly also contribute to an improvement in adhesive strength. However, when a particular amount or more of a metal hydroxide is attempted to use in order to improve adhesive strength, it has been found that a problem occurs in that the metal hydroxide precipitates in a latex. Then, they have further intensively studied to have found that precipitation of the metal hydroxide in the latex can be prevented by using a particular amount of a surfactant, and additionally, a synergistic effect of this surfactant and the metal hydroxide can further improve adhesive strength, and have completed the present technique.

That is, at first, the present technique provides a polymer latex composition for use in a mixed latex composition comprising the polymer latex composition and a curing agent composition having an isocyanate group as a functional group, the polymer latex composition comprising:

15 to 100 parts by mass of a surfactant component on a solid basis; and
30 to 600 parts by mass of a metal hydroxide;
with respect to 100 parts by mass of a polymer.

In the polymer latex composition according to the present technique, the concentration of a nonionic emulsifier in the surfactant component can be 20 to 100% by mass on a solid basis.

In this case, it is possible to use a polyvinyl alcohol having a degree of saponification of 70.0 to 96.5 mol% as the nonionic emulsifier.

In the polymer latex composition according to the present technique, it is possible to use aluminum hydroxide as the metal hydroxide.

In the polymer latex composition according to the present technique, it is possible to use a chloroprene-based polymer latex as the polymer latex.

Next, the present technique provides a mixed latex composition comprising:

100 parts by mass of the polymer latex composition according to the present technique mentioned above; and
10 to 200 parts by mass of a curing agent composition having an isocyanate group as a functional group.

It is possible to use the mixed latex composition of the present technique in an adhesive composition.

Further, the present technique provides a cured product obtained by curing the adhesive composition according to the present technique mentioned above.

The cured product according to the present technique can be used in civil engineering repair and reinforcing materials such as water stop materials, exfoliation preventing materials, and surface coating materials.

Additionally, the present technique provides a civil engineering repairing and reinforcing method, such as a water stopping method, an exfoliation preventing method, and a surface coating method, performing
a step of applying, injecting, or spraying the adhesive composition according to the present technique mentioned above to an adherend, and
a step of curing the adhesive composition.

**Advantageous Effects of Invention**

According to the present technique, it is possible to provide a polymer latex composition that can be used in a two-liquid-type adhesive having good adhesive strength on rigid adherends such as concrete and mortar.

Brief Description of Drawings

[Figure 1] Figure 1 is a plan view (sign A), a front view (sign B), and side view (sign C), each illustrating a concrete framework used in a water stop test.
[Figure 2] Figure 2 is a perspective view illustrating the concrete framework 1 used in a water stop test.

Description of Embodiments

Hereinbelow, a preferred embodiment for implementing the present technique will be described. Note that the embodiment described below illustrates an exemplary representative embodiment of the present technique, and the scope of the present technique is not narrowly interpreted by the embodiment.

<Polymer latex composition>

A polymer latex composition of the present embodiment is a polymer latex composition for use in a mixed latex composition comprising the polymer latex composition and a curing agent composition having an isocyanate group as a functional group, and the polymer latex composition at least comprises a polymer to be a base, a surfactant component, and a metal hydroxide. Hereinbelow, the components for use in the polymer latex composition of the present embodiment will be described in detail.

(1) Polymer

For the polymer for use in the polymer latex composition of the present embodiment, one or two or more known polymers may be optionally selected and used as long as the polymers are polymers that can be used as the base of the main agent of a two-liquid-type adhesive. Examples thereof can include butadiene-based polymers, styrene-butadiene copolymers, styrene-methyl methacrylate-butadiene copolymers, methyl methacrylate-butadiene copolymers, acrylonitrile-butadiene copolymers, chloroprene-based polymers, vinyl chloride-based polymers, vinylidene chloride-based polymers, ethylene-vinyl acetate copolymers, acrylate-vinyl acetate copolymers, acrylate-methyl methacrylate copolymers, acrylate-styrene copolymers, acrylate-ethylene copolymers, silicone-acrylate copolymers, isoprene polymers, natural rubber, olefinic polymers, and urethane-based polymers.

Among these, it is preferable to use a chloroprene-based polymer as the polymer in the present embodiment. The chloroprene-based polymer is a homopolymer of 2-chloro-1,3-butadiene (hereinbelow, abbreviated as "chloroprene") or a copolymer obtained by copolymerizing chloroprene and one or more monomers copolymerizable with chloroprene.

Examples of the monomer copolymerizable with chloroprene include 2,3-dichloro-1,3-butadiene, 1-chloro-1,3-butadiene, butadiene, isoprene, styrene, acrylonitrile, acrylic acid and esters thereof, and methacrylic acid and esters thereof, and two or more of these can be used as required.

On one hand, the chloroprene-based polymers are roughly divided into sulfur-modified chloroprene-based polymers and non-sulfur-modified chloroprene-based polymers depending on the difference in polymerization methods, and the non-sulfur-modified ones are further classified into mercaptan-modified chloroprene-based polymers and xanthogen-modified chloroprene-based polymers, depending on the type of molecular weight modifier. The sulfur-modified chloroprene-based polymer is one obtained by copolymerizing a raw material monomer containing chloroprene as the main component with sulfur, plasticizing the obtained copolymer with thiuram disulfide, and adjusting so as to have a predetermined Mooney viscosity.

On the other hand, the mercaptan-modified chloroprene-based polymer can be obtained using alkylmercaptans such as n-dodecyl mercaptan, tert-dodecyl mercaptan, and octyl mercaptan as the molecular weight modifier. Alternatively, the xanthogen-modified chloroprene-based polymer can be obtained using an alkylxanthogen compound as the molecular weight modifier. Then, the chloroprene-based polymer that can be used in the present embodiment may be any of the various chloroprene-based polymers mentioned above.

Further, the chloroprene-based polymers may be classified also into, for example, low crystallization rate types, moderate crystallization rate types, high crystallization rate types, and the like, depending on its crystallization rate. Then, in the present embodiment, any of the types of chloroprene-based polymer mentioned above may be used and can be appropriately selected and used depending on applications or the like.

A method for producing a chloroprene-based polymer is not particularly limited, and a raw material monomer can be polymerized in the presence of a surfactant, a polymerization initiator, a molecular weight modifier, and the like, by an emulsion polymerization method commonly used.

Also, as the polymerization initiator, it is possible to use a known polymerization initiator generally used in emulsion polymerization of chloroprene, for example, organic peroxides such as potassium persulfate, ammonium persulfate, sodium persulfate, hydrogen peroxide, and tert-butyl hydroperoxide.

Note that the polymerization temperature during emulsion polymerization is not particularly limited, and is preferably 0 to 50°C, more preferably 20 to 50°C from the viewpoint of productivity and polymerization stability. The final conversion ratio of the monomer is also not particularly limited, and is preferably in the range of 60 to 100% from the viewpoint of productivity.

Then, the chloroprene-based polymer can be produced by adding a small amount of a polymerization inhibitor to the polymerization liquid when the final conversion ratio reaches a predetermined range to terminate the polymerization reaction.

At this time, as the polymerization inhibitor, it is possible to use one commonly used, such as thiodiphenylamine, 4-tert-butylcatechol, and 2,2-methylenebis-4-methyl-6-tert-butylphenol.

Additionally, for example, it is also possible to remove unreacted monomers from the chloroprene-based polymer after the polymerization reaction by a steam stripping method and the like, and it is also possible to adjust the pH of the latex.

Note that the chloroprene-based polymer in the present technique is not particularly limited, and it is preferable that the toluene insoluble of the chloroprene (co)polymer is 20 to 99%.

(2) Surfactant

The polymer latex composition of the present embodiment contains the surfactant component in the range of 15 to 100 parts by mass on a solid basis with respect to 100 parts by mass of the polymer mentioned above, and particularly preferably in the range of 20 to 95 parts by mass.

Here, when the content of surfactant is less than 15 parts by mass, on mixing with a curing agent composition having an isocyanate group as a functional group mentioned below (hereinbelow, also simply referred to as an "isocyanete compound"), aggregation and rubber precipitation readily occur, and uniform cured product may not obtained, alternatively, the adhesive strength of a cured product to be obtained on a rigid adherend such as concrete and mortar may become insufficient. When the content of the surfactant is set to 15 parts by mass or more, it is possible to suppress precipitation of a metal hydroxide mentioned below in the polymer latex. Meanwhile, when more than 100 parts by mass of the surfactant is contained, excessive air bubbles are observed, and an operation such as mixing and application may be interfered.

The polymer latex composition of the present embodiment contains the surfactant used on producing the polymer, but it is also possible to additionally add a surfactant thereto after polymerization. That is, it is possible to appropriately adjust the amount of the surfactant contained in the polymer latex composition.

The surfactant here means an emulsifier that forms a micelle (surfactant assembly) in an aqueous medium. The surfactant to be used in the present embodiment is not particularly limited, and one or two or more known surfactants may be optionally selected and used. Examples thereof include anionic emulsifiers such as salts of rosin acids, salts of fatty acids, alkylsulfonates such as Na alkylbenzenesulfonate, and alkyl sulfates such as Na lauryl sulfate, nonionic emulsifiers such as polyoxyethylene alkylethers, cellulosic derivatives, polyoxyethylene alkylarylethers, polyoxyethylene styrylphenyl ether, polyoxyalkyl phenyl ethers, polyoxyalkylene alkyl ethers, polyoxyethylene-acetylene glycol ethers, polyoxyethylene sorbitan fatty acid esters, higher fatty acid alkanol amides, and polyvinyl alcohol, and cationic emulsifiers such as alkylamine salts and quaternary ammonium salts.

[Nonionic emulsifier]

In the polymer latex composition of the present embodiment, it is possible to set the concentration of the nonionic emulsifier in the surfactant to 20 to 100% by mass on a solid basis, as required. Thereby, it is possible to provide a stable polymer latex composition, and the polymer latex composition contributes to stable curing when mixed with an isocyanate compound mentioned below, and thus, as a result, the cured product develops good adhesive strength on a rigid adherend such as concrete and mortar. When the concentration of the nonionic emulsifier in the surfactant is set to 20% by mass or more, it is possible to further improve the stability of the polymer latex composition, it becomes not necessary to suppress the amount of an isocyanate compound mentioned below to be used, and it is possible to further improve the adhesive strength of a cured product to be obtained on a rigid adherend such as concrete and mortar.

[Polyvinyl alcohol]

In the polymer latex composition of the present embodiment, it is possible to use polyvinyl alcohol as a portion or the entire amount of the nonionic emulsifier.

The type of polyvinyl alcohol is not particularly limited, and from the viewpoint of further improving the stability of the polymer latex composition, it is desirable to contain a polyvinyl alcohol having a degree of saponification of 70.0 to 96.5 mol%. When a polyvinyl alcohol having a degree of saponification of 70.0 mol% or more and 96.5 mol% or less is used, it is possible to further improve the stability of the polymer latex composition, the limit on the amount of isocyanate compound mentioned below to be used is eliminated, and it is possible to further improve the adhesive strength of a cured product to be obtained on a rigid adherend such as concrete and mortar.

The degree of polymerization of the polyvinyl alcohol is also not particularly limited, and from the viewpoint of further improving the stability of the polymer latex composition, it is desirable to contain a polyvinyl alcohol having a degree of polymerization of 200 to 4500. , When a polyvinyl alcohol having a degree of polymerization of 200 to 4500 is used, the limit on an isocyanate compound mentioned below is eliminated, and it is possible to improve the adhesive strength of a cured product to be obtained on a rigid adherend such as concrete and mortar.

Here, the polyvinyl alcohol refers to a polymer obtained by saponifying a homopolymer of a vinyl ester monomer or a copolymer of a vinyl ester monomer and a monomer copolymerizable with the monomer.

Examples of the vinyl ester monomer include, but are not particularly limited to, vinyl formate, vinyl acetate, vinyl propionate, vinyl valerate, vinyl caprate, vinyl laurate, vinyl stearate, vinyl benzoate, vinyl pivalate, and vinyl versatate. Among these, it is particularly desirable to use vinyl acetate, which is excellent in stability on polymerization.

On production of the polyvinyl alcohol, other monomer copolymerizable with each monomer mentioned above may be copolymerized as required. At this time, examples of the copolymerizable monomer include, but are not particularly limited to, olefins such as ethylene, propylene, 1-butene, and isobutene, unsaturated acids such as acrylic acid, methacrylic acid, crotonic acid, phthalic acid, maleic acid, and itaconic acid, or salts thereof, acrylamides such as acrylamide, N-alkyl acrylamides having 1 to 18 carbon atoms, N,N-dialkyl acrylamide, diacetone acrylamide, 2-acrylamide propane sulfonic acid and salts thereof, acrylamide propyl dimethylamine and salts thereof or quaternary salts, methacrylamides such as methacrylamide, N-alkyl methacrylamides having 1 to 18 carbon atoms, N,N-dialkyl methacrylamide, diacetone methacrylamide, 2-methacrylamide propane sulfonic acid and salts thereof, 3,4-diacetoxy-1-butene, glycerin monoallyl ether, methacrylamide propyl dimethylamine and salts thereof or quaternary salts, vinyl ethers such as alkyl vinyl ethers having an alkyl chain length of 1 to 18 carbon atoms, hydroxyalkyl vinyl ethers, and alkoxyalkyl vinyl ethers, N-vinyl amides such as N-vinyl pyrrolidone, N-vinyl formaldehyde, and N-vinyl acetamide, vinyl cyanides such as acrylonitrile and methacrylonitrile, vinyl halides such as vinyl chloride, vinylidene chloride, vinyl fluoride, vinylidene fluoride, vinyl iodide, and vinylidene iodide, vinylsilans such as trimethoxyvinylsilane, allyl compounds such as allyl acetate, allyl chloride, allyl alcohol, and dimethylallyl alcohol, vinylsilyl compounds such as vinyltrimethoxysilane, and isopropenyl acetate.

Note that the amount of these other monomers copolymerizable to be used is not particularly limited, and it is desirable that the amount is 0.001 mol% or more and less than 20 mol% based on the total amount of the monomers.

A method for polymerizing these monomers is not particularly limited, and it is possible to employ a known radical polymerization method. It is generally produced by solution polymerization in which alcohols such as methanol, ethanol, or isopropyl alcohol is used as a solvent, but may be produced by bulk polymerization, emulsion polymerization, suspension polymerization, or the like. In the case where bulk polymerization or solution polymerization is performed, the polymerization may be either continuous polymerization or batch polymerization. Further, the monomers may be fed all at once or may be fed dividedly, or may be added continuously or intermittently.

The polymerization initiator to be used in radical polymerization is not particularly limited, and it is possible to use azo compounds such as azobisisobutyronitrile, azobis-2,4-dimethylvaleronitrile, and azobis(4-methoxy-2,4-dimethylvaleronitrile), peroxides such as acetyl peroxide, benzoyl peroxide, lauroyl peroxide, acetylcyclohexylsulfonyl peroxide, and 2,4,4-trimethylpentyl-2-peroxyphenoxy acetate, percarbonate compounds such as diisopropyl peroxydicarbonate, di-2-ethylhexyl peroxydicarbonate, and diethoxyethyl peroxydicarbonate, perester compounds such as t-butylperoxy neodecanoate, $\alpha$-cumylperoxy neodecanoate, and t-butylperoxy neodecanoate, and known radical polymerization initiators such as azobisdimethylvaleronitrile and azobismethoxyvaleronitrile. The polymerization reaction temperature is not particularly limited, and can be usually set in the range of around 30 to 90°C.

Saponification conditions on producing the polyvinyl alcohol is also not particularly limited, and the polymer obtained by the method mentioned above may be saponified by a known method. Generally, it can be performed by hydrolyzing the ester moiety in the molecule in the presence of an alkali catalyst or an acid catalyst. In this time, the concentration of the copolymer in alcohol as the polymerization solvent is not particularly limited, and it is desirable that the concentration is 10 to 80% by mass.

As the alkali catalyst to be used in this case, for example, a hydroxide of an alkali metal such as sodium hydroxide, potassium hydroxide, sodium methylate, sodium ethylate, and potassium methylate, or an alcoholate can be used. As the acid catalyst, for example, an aqueous solution of an inorganic acid such as hydrochloric acid and sulfuric acid, or an organic acid such as p-toluenesulfonic acid can be used, but it is particularly desirable to use sodium hydroxide.

Further, the temperature for the saponification reaction is not particularly limited, and it is preferable that the temperature is in the range of 10 to 70°C. The reaction time is not particularly limited, and it is preferable to perfrom in the range of 30 minutes to 3 hours.

(3) Metal hydroxide

The polymer latex composition of the present embodiment is characterized by comprising a metal hydroxide in the range of 30 to 600 parts by mass, preferably 50 to 600 parts by mass, more preferably 100 to 600 parts by mass, with respect to 100 parts by mass of the polymer mentioned above. The adhesive strength of the polymer latex composition of the present embodiment is dramatically high when used as an adhesive because of the synergistic effect of the surfactant component mentioned above and the metal hydroxide. Additionally, by using the metal hydroxide, it is also possible to improve flame retardancy when the polymer latex composition of the present embodiment is used as an adhesive.

Here, when the content of the metal hydroxide is less than 30 parts by mass with respect to 100 parts by mass of the polymer, sufficient adhesive strength may not be achieved when the polymer latex composition of the present embodiment is used as an adhesive. Alternatively, when it exceeds 600 parts by mass, the metal hydroxide cannot be uniformly dispersed, a uniform adhesive composition is not achieved, and thus, there is a case where sufficient adhesive strength cannot be obtained.

The metal hydroxide to be used in the polymer latex composition of the present embodiment is not particularly limited as long as the metal hydroxide does not impair the effect of the present technique, and one or two or more known metal hydroxides can be optionally selected and used. Examples thereof include magnesium hydroxide ($Mg(OH)_2$), aluminum hydroxide ($Al(OH)_3$), copper hydroxide ($Cu(OH)_2$), nickel hydroxide ($Ni(OH)_2$), iron(II) hydroxide ($Fe(OH)_2$), iron(III) hydroxide ($Fe(OH)_3$), tin hydroxide ($Sn(OH)_2$), chromium(III) hydroxide ($Cr(OH)_3$), manganese hydroxide ($Mn(OH)_2$), and cadmium hydroxide ($Cd(OH)_2$). Among these, in the present embodiment, aluminum hydroxide is particularly preferred from the viewpoint of a high effect of providing flame retardancy.

(4) Other components

The polymer latex composition of the present embodiment also can comprise a tackifier resin, a pH modifier, a metal oxide, a plasticizer, an antidegradant, a thickener, a reduction agent, a defoamer, and a filler, in addition to each of the components mentioned above, and it is also possible to additionally use these other components to the polymer latex composition after polymerization.

As described above in detail, the polymer latex composition of the present embodiment comprises a particular amount of a surfactant, and thus, the stability of the latex does not decrease, and it is possible to stably subject the latex to curing. Additionally, the cured product develops good adhesive strength on a rigid adherend such as concrete and mortar because of the synergistic effect of a specific amount of the surfactant and a specific amount of the metal hydroxide. Further, in the polymer latex composition of the present embodiment, it is also possible to further improve the effect by allowing the surfactant component to contain a nonionic emulsifier at a specific concentration or by using a specific polyvinyl alcohol as the nonionic emulsifier.

<Adhesive composition and cured product thereof>

The adhesive composition of the present embodiment uses a mixed latex composition obtained by mixing a curing agent composition having an isocyanate group as a functional group into the polymer latex composition of the present embodiment mentioned above, and the cured product is obtained by applying or injecting the adhesive composition and then curing.

Here, there is no limitation on the amount of the isocyanate compound to be mixed, but the amount is preferably 10 to 200 parts by mass with respect to 100 parts by mass of the polymer latex composition. When the amount of the isocyanate compound is set to 10 parts by mass or more, curing proceeds sufficiently in the case where the adhesive composition, in which the mixed latex composition mixed with the isocyanate compound is used, is applied or injected and then cured. Additionally, when it is set to 200 parts by mass or less, an aggregate is prevented from occurring when the isocyanate compound is mixed, it is possible to obtain a uniform cured product, and it is possible to further improve adhesive strength of a cured product to be obtained on a rigid adherend such as concrete and mortar.

The isocyanate compound in the present technique is not particularly limited, examples thereof include diisocyanate compounds, polyisocyanate compounds other than diisocyanate compounds, and other hydraulic polyurethane resins, and one or two or more thereof can be optionally selected and used. Examples of the diisocyanate and polyisocyanate compounds and other hydraulic polyurethane resin can include diisocyanate compounds such as phenylene diisocyanate, tolylene diisocyanate, xylylene diisocyanate, tetramethylxylylene diisocyanate, 4,4'-biphenyl diisocyanate, 3,3'-dimethyl-4,4'-diphenylmethane diisocyanate, triphenylmethane diisocyanate, 3,3'-dimethyl-4,4'-biphenyl diisocyanate, 4,4'-diphenylmethane diisocyanate, naphthalene diisocyanate, isophorone diisocyanate, cyclohexylnene diisocyanate, hydrogenated tolylene diisocyanate, hydrogenated xylylene diisocyanate, dicyclohexylmethane diisocyanate, and hexamethylene diisocyanate; triisocyanate compounds such as biphenyl triisocyanate, diphenylmethane triisocyanate, triphenylmethane triisocyanate, and naphthalene triisocyanate; and polymerized products thereof. The isocyanate compound in the present technique also can be used in the form of a prepolymer having a reactive isocyanate group at its terminal, which is obtained by a reaction between the diisocyanate compound, polyisocyanate compound other than the diisocyanate compound, or other hydraulic polyurethane resin with a polyamine compound, a polyhydric alcohol, or a polyol compound. Examples of the polyamine compound can include ethylenediamine, diethylenetriamine, triethylenetetramine, tetraethylenehexamine, pentaethylenehexamine, cyclohexylenediamines, dicyclohexyl methanediamines, isophoronediamines, phenylenediamines, tolylenediamines, xylylenediamines, diphenylmethanediamines, triphenylmethane polyamines, piperazine, and aminoethylpiperazine. Examples of the polyhydric alcohol can include ethylene glycol, propylene glycol, 1,4-butanediol, neopentyl glycol, hexamethylene glycol, diethylene glycol, triethylene glycol, glycerin, hexanetriol, trimethylolpropane, pentaerythritol, and sorbitol. Further, examples of the polyol compound can include polyether polyol compounds obtained by addition polymerization of the polyhydric alcohol with an alkylene oxide such as ethylene oxide or propylene oxide; polyester polyol compounds obtained by a condensation reaction between the polyhydric alcohol and a polybasic acid such as maleic acid, succinic acid, adipic acid, tartaric acid, sebacic acid, terephthalic acid, or isophthalic acid; polyester polyol compounds obtained by a ring-opening polymerization of lactones such as ε-caprolactone or γ-valerolactone; epoxy polyol compounds obtained by allowing an alkanol amine such as monoethanolamine or diethanolamine to react with an epoxy resin having an epoxy group on each terminal; homopolymers of a hydroxyl group-containing polymerizable monomer such as 2-hydroxyethyl (meth)acrylate, 3-hydroxylpropyl (meth)acrylate, 4-hydroxylbutyl (meth)acrylate, or trimethylolpropane (meth)acrylic acid monoester or copolymers thereof; copolymers of the hydroxyl group-containing polymerizable monomer and other copolymerizable monomer, such as (meth)acrylic acid, methyl (meth)acrylate, ethyl (meth)acrylate, (meth)acrylonitrile, styrene, or α-methylstyrene; and castor oil or derivatives thereof.

The adhesive strength of the cured product of the present embodiment is good on a rigid adherend such as concrete and mortar because the polymer latex composition mentioned above is used in the cured product. More specifically, it develops good adhesive strength on a rigid adherend of, for example, concrete or mortar, woods, glass, ceramic, metals such as iron, zinc, or copper, or plastics such as polypropylene and polyethylene. Particularly, as shown in Examples mentioned below, it is possible to obtain sufficient adhesive strength on an adherend even in a wet state. For this reason, it is possible to use the cured product in civil engineering repairing and reinforcing applications and construction applications for the purpose of filling cavities in the ground and surface coating materials of concrete or mortar, application on cracking or a back surface, water stop materials, waterproof materials, exfoliation preventing materials, fillers in masonry joints and joints, vibration absorption, and the like.

<Civil engineering repairing and reinforcing method>

It is possible to use the adhesive composition of the present embodiment mentioned above in a civil engineering repairing and reinforcing method, by use of its high adhesive strength and flame retardancy. Examples of the civil engineering repairing and reinforcing method include a water stopping method, an exfoliation preventing method, a surface coating method, a cross-sectional repair method, a surface impregnation method, a prepacked method, a crack injection method, an RC jacketing method, a steel sheet jacketing method, a carbon fiber reinforcing method, a carbon fiber sheet on-site bonding method, an aramid fiber sheet bonding method, a water conveyance method, a steel sheet bonding method, a stringer beam adding method, a backfill injection method, an embedded joint method, porous concrete pavement, and early-opening-to-traffic concrete pavement.

The adhesive composition of the present embodiment is suitable for the water stopping method among the civil engineering repairing and reinforcing methods mentioned above. The water stopping method is a method for stopping water leak occurring from a crack portion or a gap in agricultural water pipelines, corrugated piping, and concrete structures. Examples thereof include a back surface injection water stopping method, in which water is stopped by curing a water stop material between the back surface of a concrete structure and covering soil in contact with the back surface, as in Japanese Unexamined Patent Publication No. 2014-208970, and a high-pressure injection water stopping method, in which a water stop material is injected under pressure into a water leaking crack in a concrete structure, as in Japanese Unexamined Patent Publication No. 2004-251007. The water stopping methods for the adhesive composition of the present embodiment are not particularly limited, and the adhesive composition can be used as a water stop material for these water stopping methods.

The adhesive composition of the present embodiment is also suitable for the exfoliation preventing method among the civil engineering repairing and reinforcing methods mentioned above. The exfoliation preventing method is a method for preventing defects such as cracks occurring during construction of a concrete structure, damage such as cracks and delamination due to earthquakes, impacts, and the like, and exfoliation of concrete lumps derived from neutralization, salt damage, alkali aggregate reaction, or the like. Examples thereof include a method in which a resin composition is applied in a single layer on a concrete surface, as in Japanese Unexamined Patent Publication No. 2014-77287, and a method in which one or two primers are used to produce a laminate for use, as in Japanese Unexamined Patent Publication Nos. 2004-18719 and 2011-52457. The exfoliation preventing methods for the adhesive composition of the present embodiment are not particularly limited, and the adhesive composition can be used as an exfoliation preventing material for these exfoliation preventing methods.

In the exfoliation preventing method in which the adhesive composition of the present embodiment is used, a staple fiber, a mesh sheet, or a primer may be used in combination as required.

The adhesive composition of the present embodiment is suitable for the surface coating method among the civil engineering repairing and reinforcing method mentioned above. The surface coating method is a method of application for the purpose of protecting a corrosion phenomenon of a steel material in concrete from the outside or for the purpose of protecting concrete, and an example thereof is a method for applying polymer cement mortar as a surface coating material, as in Japanese Unexamined Patent Publication No. 2012-207449. The surface coating methods for the adhesive composition of the present embodiment are not particularly limited, and the adhesive composition can be used as a surface coating material for such surface coating methods. Note that the adhesive composition can be used in a single layer or also can be used in a method in which the composition is combined with other materials to form a laminate for use.

The civil engineering repairing and reinforcing method of the present embodiment is a method in which a step of applying, injecting, or spraying the adhesive composition mentioned above to an adherend and a step of curing the adhesive composition are at least performed, and known various steps specific to each method, besides these steps, can be optionally selected and performed as long as the effect of the present technique is not impaired.

The method for applying or injecting the adhesive composition to an adherend is not particularly limited as long as the effect of the present technique is not impaired, and a known method can be optionally adopted. Examples thereof include a method of application with a brush and a method of injection with a caulking gun.

The method for curing the adhesive composition is also not particularly limited as long as the effect of the present technique is not impaired, and a known method can be optionally employed, but it is possible to cure the adhesive composition of the present embodiment by, for example, applying or injecting the composition to an adherend, molding or constructing the composition, and then leaving the composition in the state to stand for a predetermined time.

**Examples**

Hereinbelow, the present technique will be further described in detail on the basis of Examples. Note that Examples described below illustrate an exemplary representative example of the present technique, and the scope of the present technique is not narrowly interpreted due to Examples.

(1) Production of polymer latex compositions A to U

By use of a reactor of an inner volume of 3 liters, 100 parts by mass of water, a surfactant (1), and 0.1 parts by mass of sodium sulfite were fed thereto under a nitrogen gas flow, and after dissolution, 100 parts by mass of chloroprene and 0.3 parts by mass of n-octylmercaptan were added thereto under stirring. Polymerization was performed at 40°C using potassium persulfate as an initiator, and when the polymerization ratio reached 100%, a phenothiazine emulsion was added to terminate the polymerization. After termination of the polymerization, a surfactant (2) and a metal hydroxide were added to thereby obtain a polymer latex composition. The types of the surfactants (1) and (2) added, the amount thereof added as pure content, the types of the metal hydroxide, and the amount thereof added are shown in Table 1, Table 2, and Table 3.

[Table 1]

| Polymer latex | A | | B | | C | | D | | E | | F | | G | |
|---|---|---|---|---|---|---|---|---|---|---|---|---|---|---|
| Polymer [parts by mass] | 100 | | 100 | | 100 | | 100 | | 100 | | 100 | | 100 | |
| Surfactant [parts by mass] | (1) | (2) | (1) | (2) | (1) | (2) | (1) | (2) | (1) | (2) | (1) | (2) | (1) | (2) |
| Disproportionated potassium rosinate | | | | | | | | | | | | | | |
| Sodium salt of condensation product of β-naphthalenesulfonic acid and formalin | | | | | | | | | | | | | | |
| (hereinbelow, nonionic emulsifier) | | | | | | | | | | | | | | |
| Polyoxyethylene styrenated phenyl ether | | | | | | | | | | | | | | |
| Polyoxyethylene alkylene alkyl ether | | | | | | | | | | | | | | |
| Polyvinyl alcohol A (degree of saponification 78.5 mol%) | 10 | | 10 | | 10 | | 10 | | 10 | | 10 | | 10 | |

(continued)

| (hereinbelow, nonionic emulsifier) | | | | | | | |
|---|---|---|---|---|---|---|---|
| Polyvinyl alcohol B (degree of saponification 80.0 mol%) | | | | | | 50 | 50 |
| Polyvinyl alcohol C (degree of saponification 89.0 mol%) | 50 | 50 | 50 | 50 | 50 | | |
| Polyvinyl alcohol D (degree of saponification 96.5 mol%) | | | | | | | |
| Polyvinyl alcohol E (degree of saponification 70.0 mol%) | | | | | | | |
| Polyvinyl alcohol F (degree of saponification 98.0 mol%) | | | | | | | |
| Polyvinyl alcohol G (degree of saponification 42.0 mol%) | | | | | | | |
| (Total of nonionic emulsifiers [parts by mass]) | 60.0 | 60.0 | 60.0 | 60.0 | 60.0 | 60.0 | 60.0 |
| Total of surfactants [parts by mass] | 60.0 | 60.0 | 60.0 | 60.0 | 60.0 | 60.0 | 60.0 |
| Nonionic emulsifier concentration [%by mass] | 100.0 | 100.0 | 100.0 | 100.0 | 100.0 | 100.0 | 100.0 |
| Metal hydroxide [parts by mass] | | | | | | | |
| Aluminum hydroxide | 300.0 | 600.0 | 30.0 | | 50.0 | 100.0 | 300.0 |
| Magnesium hydroxide | | | | 300.0 | | | |

[Table 2]

| Polymer latex | H | | I | | J | | K | | L | | M | | N | |
|---|---|---|---|---|---|---|---|---|---|---|---|---|---|---|
| Polymer [parts by mass] | 100 | | 100 | | 100 | | 100 | | 100 | | 100 | | 100 | |
| Surfactant [parts by mass] | (1) | (2) | (1) | (2) | (1) | (2) | (1) | (2) | (1) | (2) | (1) | (2) | (1) | (2) |
| Disproportionated potassium rosinate | | | | | | | | | 3 | 20 | 3 | 50 | | |

(continued)

| Polymer latex | H | I | J | K | L | M | N |
|---|---|---|---|---|---|---|---|
| Sodium salt of condensation product of β-naphthalenesulfonic acid and formalin | | | | | 0.3 | 0.3 | |
| (hereinbelow, nonionic emulsifier) | | | | | | | |
| Polyoxyethylene styrenated phenyl ether | | | | | 0.5 | | |
| Polyoxyethylene alkylene alkyl ether | | | | | | 0.5 | |
| Polyvinyl alcohol A (degree of saponification 78.5 mol%) | 10 | 5 | 10 | 5 | | | 5 |
| Polyvinyl alcohol B (degree of saponification 80.0 mol%) | | 90 | | 85 | | | |
| Polyvinyl alcohol C (degree of saponification 89.0 mol%) | | 10 | | 15 | | | 30 |
| Polyvinyl alcohol D (degree of saponification 96.5 mol%) | | | | | | | 25 |
| Polyvinyl alcohol E (degree of saponification 70.0 mol%) | | | | | | | |
| Polyvinyl alcohol F (degree of saponification 98.0 mol%) | | | | | | | |
| Polyvinyl alcohol G (degree of saponification 42.0 mol%) | | | | | 4 | 13 | |
| (Total of nonionic emulsifiers [parts by mass]) | 100.0 | 15.0 | 95.0 | 20.0 | 4.5 | 13.5 | 60.0 |
| Total of surfactants [parts by mass] | 100.0 | 15.0 | 95.0 | 20.0 | 27.8 | 66.8 | 60.0 |
| Nonionic emulsifier concentration [%by mass] | 100.0 | 100.0 | 100.0 | 100.0 | 16.2 | 20.2 | 100.0 |

(continued)

| Metal hydroxide [parts by mass] | | | | | | | |
|---|---|---|---|---|---|---|---|
| Aluminum hydroxide | 300.0 | 100.0 | 100.0 | 100.0 | 100.0 | 100.0 | 300.0 |
| Magnesium hydroxide | | | | | | | |

[Table 3]

| Polymer latex | O | | P | | Q | | R | | S | | T | | U | |
|---|---|---|---|---|---|---|---|---|---|---|---|---|---|---|
| Polymer [parts by mass] | 100 | | 100 | | 100 | | 100 | | 100 | | 100 | | 100 | |
| Surfactant [parts by mass] | (1) | (2) | (1) | (2) | (1) | (2) | (1) | (2) | (1) | (2) | (1) | (2) | (1) | (2) |
| Disproportionated potassium rosinate | | | 3 | | | | | | | | | | | |
| Sodium salt of condensation product of β-naphthalenesulfonic acid and formalin | | | 0.3 | | | | | | | | | | | |
| (hereinbelow, nonionic emulsifier) | | | | | | | | | | | | | | |
| Polyoxyethylene styrenated phenyl ether | | | 0.5 | | | | | | | | | | | |
| Polyoxyethylene alkylene alkyl ether | | | | | | | | | | | | | | |
| Polyvinyl alcohol A (degree of saponification 78.5 mol%) | 5 | | | | 5 | 5 | 5 | | 5 | 50 | 5 | | 5 | |
| Polyvinyl alcohol B (degree of saponification 80.0 mol%) | | | | | | | | | | | | 55 | | |
| Polyvinyl alcohol C (degree of saponification 89.0 mol%) | | 30 | | | | | | 150 | | | | | | 55 |
| Polyvinyl alcohol D (degree of saponification 96.5 mol%) | | | | | | | | | | | | | | |
| Polyvinyl alcohol E (degree of saponification 70.0 mol%) | | 25 | | | | | | | | | | | | |

(continued)

| (hereinbelow, nonionic emulsifier) | | | | | | | |
|---|---|---|---|---|---|---|---|
| Polyvinyl alcohol F (degree of saponification 98.0 mol%) | | | 30 | | | | |
| Polyvinyl alcohol G (degree of saponification 42.0 mol%) | | | 30 | | | | |
| (Total of nonionic emulsifiers [parts by mass]) | 60.0 | 60.5 | 10.0 | 155.0 | 55.0 | 60.0 | 60.0 |
| Total of surfactants [parts by mass] | 60.0 | 63.8 | 10.0 | 155.0 | 55.0 | 60.0 | 60.0 |
| Nonionic emulsifier concentration [%by mass] | 100.0 | 94.8 | 100.0 | 100.0 | 100.0 | 100.0 | 100.0 |
| Metal hydroxide [parts by mass] | | | | | | | |
| Aluminum hydroxide | 300.0 | 300.0 | 300.0 | 300.0 | 0.0 | 0.0 | 800.0 |
| Magnesium hydroxide | | | | | | | |

Note that the types of the surfactants and metal hydroxide listed in Table 1, Table 2, and Table 3 are as follows.

- Disproportionated potassium gum rosinate: RONDIS K-25 (Arakawa Chemical Industries, Ltd.)
- Sodium salt of condensation product of β-naphthalenesulfonic acid and formalin: DEMOL N (Kao Corporation)
- Polyoxyethylene styrenated phenyl ether: NOIGEN EA-177 (DKS Co. Ltd.)
- Polyoxyethylene alkylene alkyl ether: EMULGEN LS-114 (Kao Corporation)
- Polyvinyl alcohol A: KURARAY POVAL PVA-403, degree of saponification: 78.5 mol%, degree of polymerization: 300 (KURARAY CO., LTD.)
- Polyvinyl alcohol B: DENKA POVAL W24, degree of saponification: 80.0 mol%, degree of polymerization 2400 (Denka Company Limited)
- Polyvinyl alcohol C: KURARAY POVAL PVA-235, degree of saponification: 89.0 mol%, degree of polymerization: 3500 (KURARAY CO., LTD.)
- Polyvinyl alcohol D: KURARAY POVAL PVA-CST, degree of saponification: 96.5 mol%, degree of polymerization: 1600 (KURARAY CO., LTD.)
- Polyvinyl alcohol E: DENKA POVAL MP10, degree of saponification: 70.0 mol%, degree of polymerization 1200 (Denka Company Limited)
- Polyvinyl alcohol F: KURARAY POVAL PVA-124, degree of saponification: 98.0 mol%, degree of polymerization: 2400
- Polyvinyl alcohol G: KURARAY POVAL LM-10HD, degree of saponification: 42.0 mol%, degree of polymerization: 500 (KURARAY CO., LTD.)
- Aluminum hydroxide: HIGILITE H-42M (Showa Denko K. K.)
- Magnesium hydroxide: Kisuma 5A (Kyowa Chemical Industry Co., Ltd.)

The concentration of each of the nonionic emulsifiers listed in Table 1, Table 2, and Table 3 follows the following expression.

$$(\text{Nonionic emulsifier concentration}) = (\text{total of nonionic emulsifiers}) / (\text{total of surfactants}) \times 100$$

(2) Evaluation

<Examples 1 to 22>

Adhesive compositions were prepared by mixing an isocyanate compound, of which type and amount are listed in Table 4 and Table 5, with respect to 100 parts by mass of each of the polymer latex composition A to P of Table 1, Table 2, and Table 3, and cured products consisting of these compositions were produced, and the following evaluation was performed.

[Shear adhesion test (1) (dry surface)]

A mortar specimen was applied with 150 g/m$^2$ of the adhesive composition using a brush and immediately bonded with another mortar specimen with no adhesive composition applied thereon to produce a cured product as an adhesive layer. After a set time of 7 days was taken, the bonded mortar specimens were measured for shear adhesive strength using a tensile tester at a temperature of 23°C, a humidity of 50%RH, and a tensile speed of 2.5 mm/min. The measurement results are shown in Table 4, Table 5, and Table 6, and an adhesive strength of 0.05 N/mm$^2$ or more is good.

[Shear adhesion test (2) (dry surface and initial adhesion)]

A mortar specimen was applied with 150 g/m$^2$ of the adhesive composition using a brush and immediately bonded with another mortar specimen with no adhesive composition applied thereon to produce a cured product as an adhesive layer. After a set time of 10 minutes was taken, the bonded mortar specimens were measured for shear adhesive strength using a tensile tester at a temperature of 23°C, a humidity of 50%RH, and at a tensile speed of 2.5 mm/min. The measurement results are shown in Table 4, Table 5, and Table 6, and an adhesive strength of 0.03 N/mm$^2$ or more is good.

[Shear adhesion test (3) (wet surface)]

A mortar specimen immersed in water for 1 hour in advance was applied with 150 g/m$^2$ of the adhesive composition using a brush and immediately bonded with another mortar specimen with no adhesive composition applied thereon to produce a cured product as an adhesive layer. After a set time of 7 days was taken, the bonded mortar specimens were measured for shear adhesive strength using a tensile tester at a temperature of 23°C, a humidity of 50%RH, and a tensile speed of 2.5 mm/min. The measurement results are shown in Table 4, Table 5, and Table 6, and an adhesive strength of 0.05 N/mm$^2$ or more is good.

[Shear adhesion test (4) (wet surface and initial adhesion)]

A mortar specimen immersed in water for 1 hour in advance was applied with 150 g/m$^2$ of the adhesive composition using a brush and immediately bonded with another mortar specimen with no adhesive composition applied thereon to produce a cured product as an adhesive layer. After a set time of 10 minutes was taken, the bonded mortar specimens were measured for shear adhesive strength using a tensile tester at a temperature of 23°C, a humidity of 50%RH, and a tensile speed of 2.5 mm/min. The measurement results are shown in Table 4, Table 5, and Table 6, and an adhesive strength of 0.02 N/mm$^2$ or more is good.

[Oxygen index (volume %)]

A cured product adjusted to a size of 6.5 cm in width, 150 mm in length, and 3 mm in thickness was used to measure an oxygen index (volume%) based on JIS K7201-2. The measurement results are shown in Table 4, Table 5, and Table 6, and flame retardancy is good when the oxygen index is 23 or more.

[Table 4]

| | Example | | | | | | | | | | |
|---|---|---|---|---|---|---|---|---|---|---|---|
| | 1 | 2 | 3 | 4 | 5 | 6 | 7 | 8 | 9 | 10 | 11 |
| Polymer latex (parts by mass) | 100 | 100 | 100 | 100 | 100 | 100 | 100 | 100 | 100 | 100 | 100 |
| (Polymer latex type) | A | A | A | A | A | A | A | B | C | D | E |
| Curing agent (parts by mass) | | | | | | | | | | | |
| Hydrophilic polyurethane resin | 60 | 33 | | 200 | 10 | 300 | 5 | 25 | 48 | 33 | 46 |
| Diphenylmethane diisocyanate | | | 33 | | | | | | | | |
| Adhesive strength [N/mm$^2$] | | | | | | | | | | | |
| Shear adhesive strength (1) (dry surface) | 0.21 | 0.20 | 0.21 | 0.20 | 0.20 | 0.12 | 0.12 | 0.21 | 0.21 | 0.18 | 0.21 |
| Shear adhesive strength (2) (dry surface and initial adhesion) | 0.18 | 0.17 | 0.16 | 0.16 | 0.17 | 0.09 | 0.08 | 0.17 | 0.17 | 0.14 | 0.16 |
| Shear adhesive strength (3) (wet surface) | 0.19 | 0.20 | 0.20 | 0.17 | 0.18 | 0.12 | 0.12 | 0.18 | 0.18 | 0.17 | 0.18 |
| Shear adhesive strength (4) (wet surface and initial adhesion) | 0.06 | 0.06 | 0.07 | 0.06 | 0.06 | 0.02 | 0.02 | 0.08 | 0.02 | 0.05 | 0.04 |
| Flame retardancy | | | | | | | | | | | |
| Oxygen index (volume%) | 24 | 28 | 28 | 22 | 30 | 21 | 32 | 35 | 24 | 25 | 23 |

[Table 5]

| | Example | | | | | | | | | | |
|---|---|---|---|---|---|---|---|---|---|---|---|
| | 12 | 13 | 14 | 15 | 16 | 17 | 18 | 19 | 20 | 21 | 22 |
| Polymer latex (parts by mass) | 100 | 100 | 100 | 100 | 100 | 100 | 100 | 100 | 100 | 100 | 100 |
| (Polymer latex type) | F | G | H | I | J | K | L | M | N | O | P |
| Curing agent (parts by mass) | | | | | | | | | | | |
| Hydrophilic polyurethane resin | 50 | 33 | 26 | 60 | 26 | 52 | 50 | 50 | 33 | 33 | 50 |
| Diphenylmethane diisocyanate | | | | | | | | | | | |
| Adhesive strength [N/mm$^2$] | | | | | | | | | | | |
| Shear adhesive strength (1) (dry surface) | 0.20 | 0.20 | 0.15 | 0.14 | 0.20 | 0.16 | 0.10 | 0.17 | 0.21 | 0.19 | 0.10 |

(continued)

| Adhesive strength [N/mm$^2$] | | | | | | | | | | | |
|---|---|---|---|---|---|---|---|---|---|---|---|
| Shear adhesive strength (2) (dry surface and initial adhesion) | 0.14 | 0.17 | 0.11 | 0.10 | 0.16 | 0.14 | 0.06 | 0.14 | 0.17 | 0.17 | 0.07 |
| Shear adhesive strength (3) (wet surface) | 0.17 | 0.18 | 0.14 | 0.15 | 0.17 | 0.16 | 0.09 | 0.16 | 0.18 | 0.18 | 0.10 |
| Shear adhesive strength (4) (wet surface and initial adhesion) | 0.06 | 0.07 | 0.03 | 0.04 | 0.06 | 0.05 | 0.02 | 0.05 | 0.06 | 0.06 | 0.02 |
| Flame retardancy | | | | | | | | | | | |
| Oxygen index (volume%) | 25 | 28 | 26 | 25 | 27 | 25 | 24 | 24 | 28 | 27 | 28 |

Note that the types of the isocyanate compound listed in Table 4, Table 5, and the following Table 6 are as follows.

- Hydrophilic polyurethane resin: Hycel OH-822N (TOHO Chemical Industry Co., Ltd.)
- Diphenylmethane diisocyanate: MILLIONATE MT (TOSOH CORPORATION)

<Comparative Example 1>

It was not possible to evaluate the adhesive strength and flame retardancy of the polymer latex composition Q, in which the content of the surfactant component was less than 15 parts by mass with respect to 100 parts by mass of the polymer, because the metal hydroxide precipitated one day after preparation.

<Comparative Example 2>

It was not possible to perform the mixing operation on the polymer latex composition R, in which the content of the surfactant component was more than 100 parts by mass with respect to 100 parts by mass of the polymer, because foaming was drastic when the isocyanate compound was mixed.

<Comparative Examples 3 to 5>

An isocyanate compound, of which type and amount are shown in Table 6, was used with respect to 100 parts by mass of each of the polymer latex compositions Q to U in Table 3 to prepare an adhesive composition and a cured product consisting of this adhesive composition, and evaluation similar to that in Examples 1 to 22 were performed.

[Table 6]

| | Comparative Examples | | | | |
|---|---|---|---|---|---|
| | 1 | 2 | 3 | 4 | 5 |
| Polymer latex (parts by mass) | 100 | 100 | 100 | 100 | 100 |
| (Polymer latex type) | Q | R | S | T | U |
| Curing agent (parts by mass) | | | | | |
| Hydrophilic polyurethane resin | - | 50 | 50 | 50 | 50 |
| Diphenylmethane diisocyanate | | | | | |
| Adhesive strength [N/mm$^2$] | | | | | |
| Shear adhesive strength (1) (dry surface) | - | - | 0.20 | 0.17 | 0.11 |
| Shear adhesive strength (2) (dry surface and initial adhesion) | - | - | 0.17 | 0.11 | 0.02 |

(continued)

| Adhesive strength [N/mm$^2$] | | | | | |
| --- | --- | --- | --- | --- | --- |
| Shear adhesive strength (3) (wet surface) | - | - | 0.18 | 0.16 | 0.09 |
| Shear adhesive strength (4) (wet surface and initial adhesion) | - | - | 0.00 | 0.01 | 0.00 |
| Flame retardancy | | | | | |
| Oxygen index (volume%) | - | - | 19 | 20 | 30 |

(3) Discussion

As shown in Table 4 and Table 5, Examples 1 to 22, which used any of the polymer latex compositions A to P containing 15 to 100 parts by mass of the surfactant component and 30 to 600 parts by mass of the metal hydroxide with respect to 100 parts by mass of the polymer, were good in the adhesive strength with the mortar specimens.

Meanwhile, as shown in Table 6, in Comparative Examples 3 and 4 which used the polymer latexes S and T, respectively, containing less than 30 parts by mass of the metal hydroxide with respect to 100 parts by mass of the polymer, the adhesive strength in the shear adhesion test (4) (wet surface and initial adhesion) was low, and the oxygen index was also low. In Comparative Example 5, which used the polymer latex U containing more than 600 parts by mass of the metal hydroxide with respect to 100 parts by mass of the polymer, the adhesive strength each in the shear adhesion test (2) (dry surface and initial adhesion) and the shear adhesion test (4) (wet surface and initial adhesion) was low.

In comparison among the Examples, as compared with Example 9 which used the polymer latex C in which the content of the metal hydroxide was less than 50 parts by mass with respect to 100 parts by mass of the polymer, Example 11, which used the polymer latex E containing the metal hydroxide in the range of 50 parts by mass or more, had higher adhesive strength also in the shear adhesion test (4) (wet surface and initial adhesion), and further, Examples 1, 2, 3, 4, 5, 8, and 11, which used any of the polymer latexes A, B, and F containing the metal hydroxide in the range of 100 to 600 parts by mass, resulted in higher adhesive strength in the shear adhesion test (4) (wet surface and initial adhesion). From the results, it has been found that the content of the metal hydroxide is preferable in the range of 50 to 600 parts by mass, more preferable in the range of 100 to 600 parts by mass, with respect to 100 parts by mass of the polymer.

As compared with Example 14 which used the polymer latex composition H in which the content of the surfactant component was more than 95 parts by mass, and Example 15 which used the polymer latex composition I using less than 20 parts by mass, Examples 16 and 17, which used the polymer latex compositions J and K, respectively, containing the surfactant component in the range of 20 to 95 parts by mass, resulted in higher adhesive strength in each of all the shear adhesion test (1) (dry surface), the shear adhesion test (2) (dry surface and initial adhesion), the shear adhesion test (3) (wet surface), and the shear adhesion test (4) (wet surface and initial adhesion). From the results, it has been found that the content of the surfactant component is preferably in the range of 20 to 95 parts by mass with respect to 100 parts by mass of the polymer.

Additionally, as compared with Example 18 which used the polymer latex composition L having a concentration of the nonionic emulsifier in the surfactant component of less than 20% by mass on a solid basis, Example 19, which used the polymer latex composition M containing 20% by mass or more, resulted in higher adhesive strength in each of all the shear adhesion test (1) (dry surface), the shear adhesion test (2) (dry surface and initial adhesion), the shear adhesion test (3) (wet surface), and the shear adhesion test (4) (wet surface and initial adhesion). From the results, it has been found that the concentration of the nonionic emulsifier in the surfactant is preferably set to 20 to 100% by mass on a solid basis.

Further, as compared with Example 22 which used the polymer latex composition P containing a polyvinyl alcohol having a degree of saponification of more than 96.5 mol% and a polyvinyl alcohol having a degree of saponification of less than 70.0 mol% as the nonionic emulsifier, Examples 1, 20, and 21, which used the polymer latex compositions A, N, and O, respectively, containing polyvinyl alcohols having a degree of saponification of 70.0 to 96.5 mol%, resulted in higher adhesive strength in each of all the shear adhesion test (1) (dry surface), the shear adhesion test (2) (dry surface and initial adhesion), the shear adhesion test (3) (wet surface), and the shear adhesion test (4) (wet surface and initial adhesion). From the results, it has been found that the usage of the polyvinyl alcohol having a degree of saponification of 70.0 to 96.5 mol% as the nonionic emulsifier was preferable.

Additionally, as compared with Example 6 which contained more than 200 parts by mass of the curing agent with respect to 100 parts by mass of the polymer latex, and Example 7 in which the amount of the curing agent is less than 10 parts by mass, Examples 1 to 5, which contained the curing agent in the range of 10 to 200 parts by mass, resulted in higher adhesive strength in each of all the shear adhesion test (1) (dry surface), the shear adhesion test (2) (dry surface and initial adhesion), the shear adhesion test (3) (wet surface), and the shear adhesion test (4) (wet surface and initial adhesion). From the results, it has been found that the preferable amount of the curing agent is in the range of 10 to 200 parts by mass with respect to 100 parts by mass of the chloroprene-based polymer latex composition.

(4) Water stop test

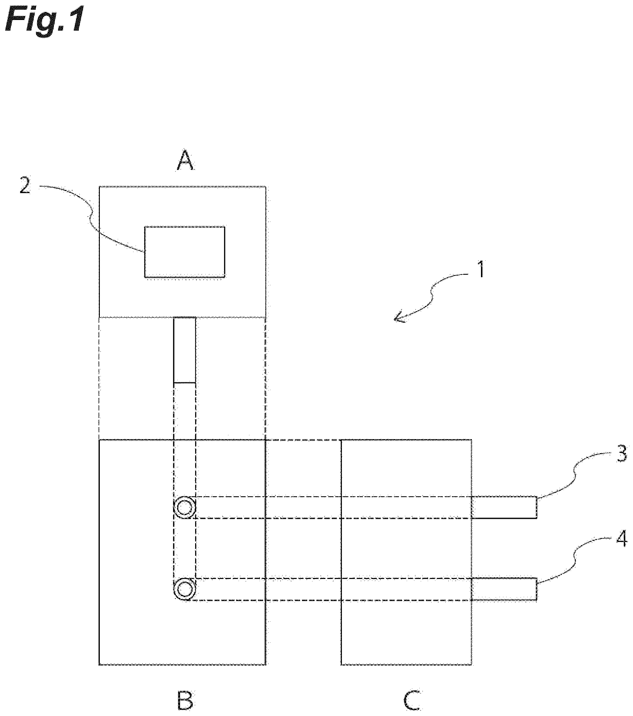

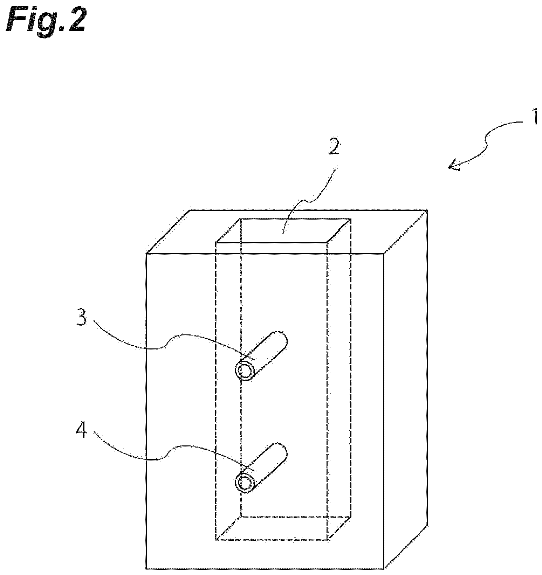

Provided was a concrete framework 1, which is hollow inside and has a water port 2 at the top, and in which piping 3 and 4 are bonded, as shown in Figure 1 and Figure 2. When water was allowed to pass from the water port 2 into this concrete framework 1, water was discharged from the piping 3 and 4. While 0.7 L/min of water was allowed to pass through the water port 2, each adhesive composition of the Example 1 and the Comparative Examples 3 was injected using a caulking gun into the piping 4 to fill the inside of the concrete framework 1 with the composition, which was then cured. After 30 minutes, 0.7 L/min of water was again allowed to flow from the water port.

<Example 1>

In the water stop test in which the adhesive composition of the Example 1 was used, water was not discharged from the piping 3 and 4, and water overflowed from the water port 2. From the result, it was possible to confirm that the cured product of the adhesive composition of the Example 1 has a water stopping property.

<Comparative Example 3>

In the water stop test in which the adhesive composition of the Comparative Examples 3 was used, adhesion between the cured product produced inside the concrete framework 1 and the concrete framework was insufficient, and a gap was generated, and thus, water was discharged from the piping 3 and 4 even when water was allowed to flow, and it was not possible to confirm a water stopping property.

<Commercially available one liquid-type hydrophilic polyurethane resin>

The water stop test was performed using a commercially available one liquid-type hydrophilic polyurethane resin (containing an isocyanate compound that contained polymethylene polyphenyl polyisocyanate and methylenebis 4,1-phenylene diisocyanate as components). When the one liquid-type hydrophilic polyurethane resin was injected into the piping 4 with 0.7 L/min of water being allowed to flow through the water port 2, the resin flowed out from the piping 3 while dispersing in water, and it was not possible to produce a cured product uniformly inside the concrete framework 1. After 30 minutes, 0.7 L/min of water was again allowed to flow from the water port 2, but discharged water was observed from the piping 3 and 4, and absence of a water stopping property was confirmed.

**Reference Signs List**

1     concrete framework
2     water port
3, 4   piping

**Claims**

**1.**  A polymer latex composition for use in a mixed latex composition comprising the polymer latex composition and a curing agent composition having an isocyanate group as a functional group, the polymer latex composition comprising:

      15 to 100 parts by mass of a surfactant component on a solid basis; and
      30 to 600 parts by mass of a metal hydroxide;
      with respect to 100 parts by mass of a polymer.

**2.**  The polymer latex composition according to claim 1, wherein a concentration of a nonionic emulsifier in the surfactant component is 20 to 100% by mass on a solid basis.

**3.**  The polymer latex composition according to claim 2, wherein the nonionic emulsifier is a polyvinyl alcohol having a degree of saponification of 70.0 to 96.5 mol%.

4. The polymer latex composition according to any one of claims 1 to 3, wherein the metal hydroxide is aluminum hydroxide.

5. The polymer latex composition according to any one of claims 1 to 4, wherein the polymer is a chloroprene-based polymer.

6. A mixed latex composition comprising:

   100 parts by mass of the polymer latex composition according to any one of claims 1 to 5; and
   10 to 200 parts by mass of a curing agent composition having an isocyanate group as a functional group.

7. An adhesive composition, wherein the mixed latex composition according to claim 6 is used.

8. A cured product of the adhesive composition according to claim 7.

9. A civil engineering repair and reinforcing material, wherein the cured product according to claim 8 is used.

10. A water stop material, wherein the cured product according to claim 8 is used.

11. An exfoliation preventing material, wherein the cured product according to claim 8 is used.

12. A surface coating material, wherein the cured product according to claim 8 is used.

13. A civil engineering repairing and reinforcing method, performing
   a step of applying, injecting, or spraying the adhesive composition according to claim 7 to an adherend, and
   a step of curing the adhesive composition.

14. A water stopping method, performing
   a step of applying, injecting, or spraying the adhesive composition according to claim 7 to an adherend, and
   a step of curing the adhesive composition.

15. An exfoliation preventing method, performing
   a step of applying, injecting, or spraying the adhesive composition according to claim 7 to an adherend, and
   a step of curing the adhesive composition.

16. A surface coating method, performing
   a step of applying, injecting, or spraying the adhesive composition according to claim 7 to an adherend, and
   a step of curing the adhesive composition.

*Fig.1*

*Fig.2*

## INTERNATIONAL SEARCH REPORT

| International application No. |
|---|
| PCT/JP2018/023407 |

**A.   CLASSIFICATION OF SUBJECT MATTER**
Int.Cl.    C08L101/00(2006.01)i,   C08K3/22(2006.01)i,   C08K5/29(2006.01)i,
           C08L11/02(200601)i,   C09J11/04(2006.01)i,   C09J11/06(2006.01)i,
           C09J101/02(2006.01)i, C09J201/00(2006.01)i

According to International Patent Classification (IPC) or to both national classification and IPC

**B.   FIELDS SEARCHED**

Minimum documentation searched (classification system followed by classification symbols)
Int.Cl. C08K3/00-13/08, C08L1/00-101/14, C09J1/00-5/10, C09J9/00-201/10,

| Documentation searched other than minimum documentation to the extent that such documents are included in the fields searched | |
|---|---|
| Published examined utility model applications of Japan | 1922–1996 |
| Published unexamined utility model applications of Japan | 1971–2018 |
| Registered utility model specifications of Japan | 1996–2018 |
| Published registered utility model applications of Japan | 1994–2018 |

Electronic data base consulted during the international search (name of data base and, where practicable, search terms used)

**C.   DOCUMENTS CONSIDERED TO BE RELEVANT**

| Category* | Citation of document, with indication, where appropriate, of the relevant passages | Relevant to claim No. |
|---|---|---|
| A | JP 56-062867 A (KOYO SANGYO CO., LTD.) 29 May 1981, claims, column 10, lines 7-20, column 11, line 12 to column 12, line 6, column 12, line 14 to column 13, line 12, column 19, line 19 to column 21, line 4, column 21, line 19 to column 22, line 20, column 24, line 1 to column 35, line 18 (Family: none) | 1-16 |
| A | JP 2008-156616 A (TORAY INDUSTRIES, INC.) 10 July 2008, entire text (Family: none) | 1-16 |
| A | JP 55-152252 A (KOYO SANGYO CO., LTD.) 27 November 1980, entire text (Family: none) | 1-16 |
| A | JP 2004-293070 A (EMULSION TECHNOLOGY CO., LTD.) 21 October 2004, entire text (Family: none) | 1-16 |
| A | JP 09-003855 A (EMULSION TECHNOLOGY CO., LTD.) 07 January 1997, entire text (Family: none) | 1-16 |

☒   Further documents are listed in the continuation of Box C.       ☐   See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 26 July 2018 (26.07.2018) | 14 August 2018 (14.08.2018) |

| Name and mailing address of the ISA/<br>    Japan Patent Office<br>    3-4-3, Kasumigaseki, Chiyoda-ku,<br>    Tokyo 100-8915, Japan | Authorized officer<br><br><br>Telephone No. |
|---|---|

Form PCT/ISA/210 (second sheet) (January 2015)

**INTERNATIONAL SEARCH REPORT**

| International application No. |
| --- |
| PCT/JP2018/023407 |

C (Continuation).    DOCUMENTS CONSIDERED TO BE RELEVANT

| Category* | Citation of document, with indication, where appropriate, of the relevant passages | Relevant to claim No. |
| --- | --- | --- |
| A | JP 09-316240 A (NIPPON ZEON CO., LTD.) 09 December 1997, entire text (Family: none) | 1-16 |
| A | JP 2005-120324 A (JSR CORPORATION) 12 May 2005, entire text (Family: none) | 1-16 |
| A | JP 2016-150946 A (NIPPON ZEON CO., LTD.) 22 August 2016, entire text (Family: none) | 1-16 |
| A | JP 2015-214676 A (JSR CORPORATION) 03 December 2015, entire text & CN 105038071 A & KR 10-2015-0121664 A | 1-16 |
| A | JP 2001-089678 A (CHUGOKU MARINE PAINTS, LTD.) 03 April 2001, entire text (Family: none) | 1-16 |
| A | JP 55-100277 A (KOYO SANGYO CO., LTD.) 31 July 1980, entire text (Family: none) | 1-16 |
| A | JP 54-139885 A (KOYO SANGYO CO., LTD.) 30 October 1979, entire text (Family: none) | 1-16 |
| A | JP 50-069154 A (KURARAY CO., LTD.) 09 June 1975, entire text (Family: none) | 1-16 |
| A | JP 50-069153 A (KURARAY CO., LTD.) 09 June 1975, entire text (Family: none) | 1-16 |
| A | JP 50-069136 A (KURARAY CO., LTD.) 09 June 1975, entire text (Family: none) | 1-16 |
| A | JP 49-026344 A (KURARAY CO., LTD.) 08 March 1974, entire text (Family: none) | 1-16 |
| A | JP 2003-342545 A (OSHIKA KK) 03 December 2003, entire text & CN 1461785 A | 1-16 |
| A | JP 60-245611 A (KURARAY CO., LTD.) 05 December 1985, entire text (Family: none) | 1-16 |
| A | JP 2008-527065 A (SYNGENTA LIMITED) 24 July 2008, entire text & US 2009/0208546 A1, entire text & WO 2006/070183 A1 & EP 1833297 A1 | 1-16 |
| A | JP 07-026209 A (NIPPON RATETSUKUSU KAKO KK) 27 January 1995, entire text (Family: none) | 1-16 |
| A | JP 62-267383 A (SIKA AG, VORM. KASPAR WINKLER & CO.) 20 November 1987, entire text & US 5342873 A, entire text & EP 244608 A1 | 1-16 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004002545 A
- JP S5659874 B
- JP H9188860 B
- JP 2002053829 A
- JP 2014208970 A
- JP 2004251007 A
- JP 2014077287 A
- JP 2004018719 A
- JP 2011052457 A
- JP 2012207449 A